# EUROPEAN PATENT SPECIFICATION

(11) **EP 1 188 347 B1**
(45) Date of publication and mention of the grant of the patent: **06.08.2008**
(21) Application number: 99926360.1
(22) Date of filing: 21.05.1999
(51) Int. Cl.: H04Q 11/04, H04L 12/56

(54) **ADAPTIVE RATE MATCHING FOR DATA OR SPEECH**
ADAPTIVE ANPASSUNG DER DATEN- UND SPRACHÜBERTRAGUNGSGESCHWINDIGKEIT
AJUSTEMENT D'UN DEBIT ADAPTATIF DE DONNEES OU DE VOIX

(43) Date of publication of application: 20.03.2002
(73) Proprietor: Nokia Corporation, 02150 Espoo (FI)
(72) Inventor: KOISTINEN, Tommi, FIN-02600 Espoo (FI)
(74) Representative: TBK-Patent
(86) International application number: PCT/EP1999/003516
(87) International publication number: WO 2000/072624

(56) References cited:
- EP-A- 0 706 297
- EP-A- 0 782 302
- EP-A- 0 790 725
- US-A- 5 805 591
- NANYING YIN ET AL: "A DYNAMIC RATE CONTROL MECHANISM FOR INTEGRATED NETWORKS" , NETWORKING IN THE NINETIES, BAL HARBOUR, APR. 7 - 11, 1991, VOL. VOL. 2, NR. CONF. 10, PAGE(S) 543 - 552 , INSTITUTE OF ELECTRICAL AND ELECTRONICS ENGINEERS XP000223378ISBN: 0-87942-694-2 abstract page 545, left-hand column, paragraph 1 page 546, left-hand column, paragraph 4 page 548, left-hand column, paragraph 3 -right-hand column, paragraph 1 page 549, left-hand column, paragraph 3 page 549, right-hand column, line 7 - line 16
- HAAS Z: "ADAPTIVE ADMISSION CONGESTION CONTROL" , COMPUTER COMMUNICATIONS REVIEW, VOL. 21, NR. 5, PAGE(S) 58 - 76 XP000240808 ISSN: 0146-4833 page 62, line 6 - line 31

## Description

### FIELD OF THE INVENTION

The present invention relates to an interface establishing means and a method for transmitting data to and receiving data from a network. In particular, the present invention relates to a gateway between two different networks and a method for operating such a gateway.

### BACKGROUND OF THE INVENTION

In recent years, the Voice over IP (VoIP) technology was developed in which a phone call is sent via an IP-based network (IP network, Internet Protocol network) such as the Internet, for example. By sending the signal via such a network instead of a conventional long distance carrier, it is possible to reduce the costs involved for such a call.

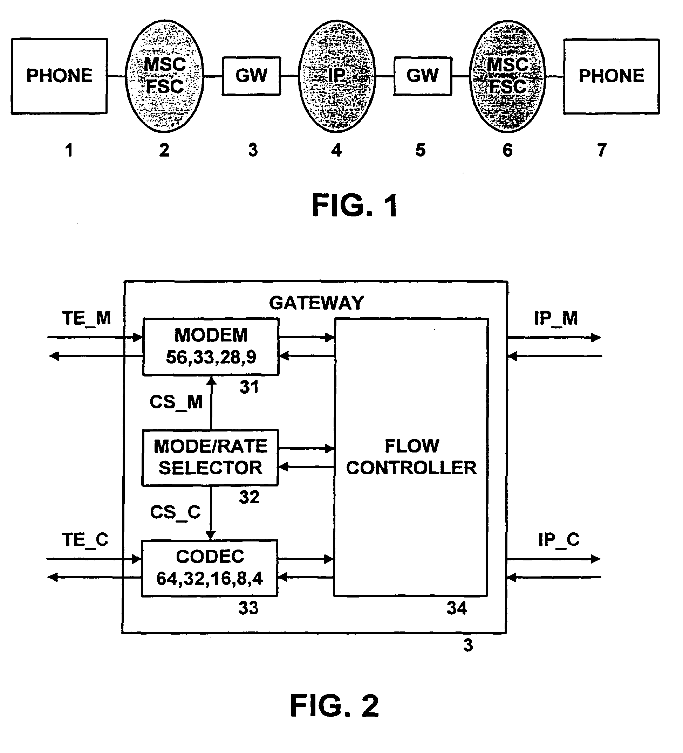

A general architecture according to the VoIP technology is shown in Fig. 1. For the purpose of the following description, the left side of the IP network 4 in Fig. 1 is referred to as the near-end side, while the right side is referred to as the far-end side.

A first communication device 1 such as a mobile phone or a fixed phone is connected to a first network control device 2 for controlling a first network (near-end network) to which the mobile phone 1 is connected. The first network control device 2 is, for example, a mobile services switching center (MSC). A speech signal is sent at a bit rate of, e.g., 64 kbps from the first network control device 2 to a first gateway 3 which connects the near-end network with the IP network 4. The speech signal can be a 64 kbps PCM channel, for example.

In order to achieve capacity saving on the IP link, the speech is compressed in the gateway. This compression is performed by a codec (coder-decoder, transcoder, code converter) arranged in the first gateway 3. A typical compression ratio for speech is, for example, 8:1. Since the function of the codec itself is not important to the present invention, a detailed description thereof is omitted here.

The speech signal is compressed, for example, to a bit rate of 8 kbps. The compressed speech signal is sent via the IP network 4 to a second gateway 5. This second gateway also comprises a codec (coder-decoder). However, this codec decompresses the compressed signal received from the IP network 4 to restore the original rate (i.e., in the above example, 64 kbps). The decompressed speech signal is sent to a second network control device 6 for controlling a second network (far-end network) to which a phone 7 as a second communication device is connected. The second network control device 6 can be a mobile services switching center (MSC) in case the phone 7 is a mobile phone or a fixed services switching center (FSC) in case the phone 7 is a fixed phone. The second network control device 6 sends the signal to the destination phone 7.

As described above, the speech signal is compressed and decompressed. In case of a speech signal, this can be effected by using a codec, as described above. The compression serves to save capacity in the IP network.

Furthermore, by compressing the signal, the transmission is not so sensitive to dropped and/or delayed packets as in the case of a non-compressed transmission.

Fax and dial-up modems use the same 64 kbps PCM signal as the speech signal does. If such signals (in the following referred to as modem signals) would be processed in the same way as the speech signal (i.e., transmitted via the codec), the modem connections could be blocked completely. For this reason, the gateways 3 and 5 also comprise modems to handle such signals.

In the above situation, high load and even congestion in the IP network is likely to happen, since, for example, the IP network capacity is not overdimensioned in great extent. This will be in particular a problem in case of a further application of the IP telephony in general.

In this situation, any delay caused by the congestion should be minimised. Thus, there is no time for retransmissions of lost packets. Therefore, the UDP (User Datagram Protocol) is commonly used instead of TCP (Transmission Control Protocol). UDP is a rather simple protocol and has a minimum protocol handling. According to this protocol, everything received from the application is sent via the network without any complicated checks. Furthermore, no check is performed whether all data packets have been received by the destination. Thus, this protocol provides a fast, but not very safe transmission.

On the other hand, TCP includes a flow control mechanism. Therefore, this protocol is safer than UDP but requires more protocol handling and more time. This results in a higher data amount required for the handling of the protocol.

In case of an overload or a congestion, UDP is not capable to detect whether any failure in the transmission have occurred. Moreover, in case of a congestion the situation in the IP network is worsen by UDP since the data packets are transferred via the network with a constant rate.

In order to make the transmission safer when using UDP, the receiving end can send back in its payloads the information received, such that it can be checked whether the data have been received safely. Alternatively, the UDP could be provided with an acknowledge mechanism like RTCP (Real Time Control Protocol) messages. However, these possibilities both lead to a higher amount of data to be sent via the network, which worsens the congestion situation.

Thus, by using the conventional techniques, in case of an overload and congestion of the network, the transmission quality is decreased since packets are delayed or even get lost.

Document EP-A-0 790 725, forming prior art as described in the preambles of claims 1 and 4, discloses an ATM transmission system with a variable transmission rate. The sending rate of a transmitter 14 is decreased when a discard of cells, i.e., a loss of data packets occurs.

The article "A Dynamic Rate Control Mechanism for Integrated Networks" by Nanying Yin et al, Network In The Nineties, Bal harbour, Apr. 7-11, 1991, Vol. 2, Nr. Conf. 10, pages 543 - 552, IEEE, describes a control by which the source coding rate is adjusted based on network feedback information.

Furthermore, also congestion of a network is detected, and in case of congestion in the network, the rate is decreased.

Moreover, document EP-A-0 782 302 describes a method and apparatus for controlling data transfer rates of sources in ATM networks. In particular, according to this document the transfer rates of a plurality of data sources are controlled on the basis of a detected congestion state.

### SUMMARY OF THE INVENTION

The object underlying this invention resides in removing the above drawbacks and to enable a sufficient transmission quality even in case of congestion of a network.

This object is solved by an interface establishing device for transmitting data to and receiving data from a network, comprising a transceiver means being operable with variable transfer rates, a detecting means for detecting the load upon said network, and a control means for adjusting the transfer rate of said transceiver means in response to the detected load, characterized in that said transceiver means comprise a plurality of transceiver means, and said control means is adapted to provide each of said plurality of transceiver means with different priorities and to adjust a transfer rate of a transceiver means with a higher priority on a higher value than the transfer rate of a transceiver means with a lower priority, wherein said transceiver means comprise a modem for modulating and demodulating of non-speech data and a codec for encoding and decoding of speech data, wherein said control means is adapted to provide said codec with a higher priority than the modem.

Alternatively, the above object is achieved by a method for transmitting data to and receiving data from a network, comprising the steps of detecting the load on said network, and adjusting a transfer rate of a transceiver means in response to said detected load, characterized in that said transceiver means comprise a plurality of transceiver means, the method further comprising the steps of providing different priorities for each of said plurality of transceiver means and adjusting a transfer rate of a transceiver means with a higher priority on a higher value than the transfer rate of a transceiver means with a lower priority, wherein said transceiver means comprises a modem for modulating and demodulating of non-speech data and a codec for encoding and decoding of speech data, and said codec is provided with a higher priority than the modem.

Thus, it is possible to adapt the transfer rate of a modem or a codec in response to the load or congestion of a network.

That is, in the interface establishing device (gateway) and method for transmitting data to and receiving data from a network according to the present invention, the transfer rate (data rate) can be adapted to the present load on the network. That is, in case a congestion occurs, the transfer rate can be set on a lower value such that data packets can be safely transmitted via the network.

Thus, the transmission quality can be maintained on a sufficient level, since no packet delay or even losses can occur. Only the bandwidth of the speech signal is slightly reduced due to the decreased transfer rate. That is, the speech quality might be reduced slightly, but the end-to-end link stays at least available.

Furthermore, by using the device and the method according to the present invention, it is possible for the IP network to recover faster from a congestion. This is because the transfer rate, i.e., the data amount transmitted per time unit is reduced, such that the load on the network is decreased.

Further advantageous developments of the present invention are stated in the enclosed dependent claims.

### BRIEF DESCRIPTION OF THE DRAWINGS

The present invention will be more readily understood with reference to the accompanying drawings in which:
Fig. 1 shows the basic structure of the VoIP technique;
Fig. 2 shows a gateway according to an embodiment of the present invention; and
Fig. 3 shows a process carried out in the gateway according to the embodiment of the invention.

### DETAILED DESCRIPTION OF PREFERRED EMBODIMENTS

The idea of the present invention is to use the congestion indication (or load indication), which is available from the flow control information (e.g., for example from RCTP reports) to control the modem and/or codec transfer rate adaptively. That is, the transfer rate is controlled in such a manner that it is reduced in case a congestion is present and packets get lost and that it is increased in case no congestion is present and all packets are safely received.

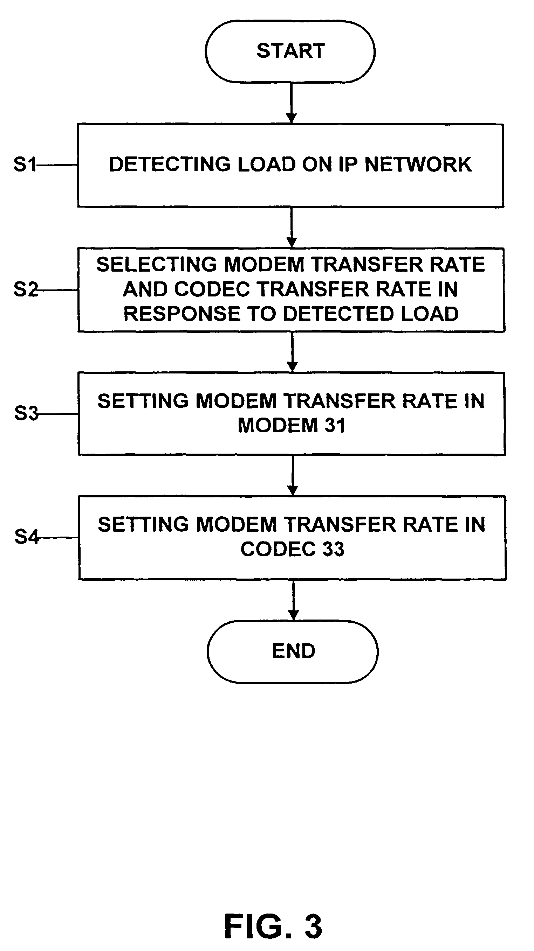

In the following, an embodiment of the invention is described with reference to Figs. 2 and 3.

In Fig. 2, a gateway 3 according to the present embodiment is shown which can be used in the basic VoIP architecture illustrated in Fig. 1. As shown, the gateway 3 comprises a modem 31, a codec 33 and a flow controller 34.

The modem 31 serves to compress and decompress fax and/or modem signals TE_M which are transferred to the side of a user terminal. The modem 31 is capable of transmitting with a plurality of different predetermined transfer rates (data rates). For example, the modem could provide transfer rates of 56 kbps, 33 kbps, 28 kbps and 9 kbps. The different rates can be selected by a modem control signal CS_M. The output signal (IP_M) is transferred to the IP network 4 via a flow controller 34.

The codec 33 serves to compress and decompress speech signals TE_D which are transferred to the side of a user terminal (in the configuration of Fig. 1, the phone 1). As the modem 31, the codec 33 is capable of transmitting with a plurality of different predetermined transfer rates (data rates). For example, the codec could provide transfer rates of 64 kbps, 32 kbps, 16 kbps, 8 kbps and 4 kbps. The different transfer rates can be selected by a codec control signal CS_C. The output signal (IP_C) is transferred to the IP network 4 via the flow controller 34.

The flow controller 34 serves basically to control the data stream sent to and received from the IP network 4. According to the present embodiment, the flow controller 34 also serves to detect the load on the network. The detection can be effected, for example, by using RTCP reports. For example, the (proprietary) RTP/TCP payloads can be used to transfer the number of transmitted/received packets between the gateways 3 and 5.

Furthermore, the load can be detected by monitoring Frame Relay's Forward/Backward Explicit Congestion Notification (FECN/BECN) bits, ATM (Asynchronous transfer mode) reports etc.

Moreover, a test packet, for example, an IP PING packet can be sent via the IP network 4 to a predetermined destination, for example to the gateway 5, and then received back from this destination. The occurred delay (round-trip delay) can than be analysed. By such an analysis, a delay can be measured. If this delay suddenly increases from an initially measured level, this indicates a congestion.

The flow controller 34 transmits corresponding detection signals to a mode/rate selector 32. According to this detection result, the mode/rate selector 32 sets (adjusts) the transfer rate of the modem 31 and the codec 33. For example, the mode/rate selector 32 sets the rate for the codec 33 according to the detected load on the network on 64 kbps PCM, GSM Full Rate (16 kbps) or GSM Half Rate (8kbps). On the other hand, in case of a modem call this information can be used to adjust the maximum transfer rate of the modem 31.

Furthermore, this information can also serve to adjust the maximum transfer rate between a users modem (which can be arranged in the phone 1 according to Fig. 1, for example) and the modem 31 in the gateway 3 in range of 33,6 kbps, 28,8 kbps, 14,4 kbps and 9,6 kbps by commanding the modem 31. Hence, the amount of data coming from the user towards the IP network 4 can be controlled according to this embodiment.

Fig. 3 shows a flow chart in which a process according to the present embodiment is illustrated.

In step S1, the load on the IP network at present is detected. This information is used in step S2, in which the modem transfer rate for the modem 31 and the codec transfer rate for the codec 33 are selected. In step S3, the modem transfer rate determined in this manner is set in the modem 31. Furthermore, in step S4 the determined codec transfer rate is set in the codec 33.

Thus, the transfer rate of the modem 31 and/or the codec 33 (which are examples for a transceiver means) can be adapted to the load and the congestion on the IP network.

In the above described embodiment, the modem and the codec have been described as comprising a plurality of different, predetermined transfer rates. However, preferably the transfer rate can be freely (i.e., continuously) adjusted. The more modes (rates) in the modem/codec are, the smoother the transfer rates can be adapted to the load generated in the IP network. Thus, preferably, a variable bit rate speech codec like an Adaptive Multi Rate (AMR) codec could be used for speech.

In the following, a second embodiment is described, which is a modification of the first embodiment. According to the first embodiment, fixed predetermined transfer rates are set in response to the detected load on the network for both the codec 33 and the modem 31 in the same way. However, it is possible that a lot of non-speech data like fax signals are transmitted via the modem. In this case, a high transmission quality in terms of speed is not as important as in speech signals, since a delay of data packets relating to a fax transmission only lengthens the time of transmission. In contrast thereto, delay of data packets relating to a speech transmission affect the speech quality greatly.

Thus, according to this embodiment, the transfer via the modem and via the codec are provided with different priorities. That is, in case of an overload or congestion of the IP network, the codec 31 gets a higher transfer rate since the codec mainly transfers speech signals. On the other hand, the modem 33 gets a lower transfer rate since the modem transfers also non-speech signals.

Moreover, as a further modification of the above described embodiments, it is also possible to simplify the detection performed by the flow controller 34. Namely, it can be assumed that the load on the IP network does not change abruptly. Thus, it can be sufficient to perform the detection only once in a predetermined period, for example, in every five minutes. For this, a timer can be inserted in the flow controller 34 which outputs an interrupt at the desired time point. In response to this interrupt, the flow controller 34 performs the process as described with respect to Fig. 3.

Hence, the flow controller 34 does not always have to perform the detection and can be used for other operations.

The above description and accompanying drawings only illustrate the present invention by way of example. Thus, the embodiments of the invention may vary within the scope of the attached claims.

## Claims

1. An interface establishing device for transmitting data to and receiving data from a network (**4**), comprising
a transceiver means (**31**, **33**) being operable with variable transfer rates,
a detecting means (**34**) for detecting the load upon said network (**4**), and
a control means (**32**) for adjusting the transfer rate of said transceiver means (**31**, **33**) in response to the detected load,
**characterized in that**
said transceiver means comprise a plurality of transceiver means, and said control means (**32**) is adapted to provide each of said plurality of transceiver means (**31**, **33**) with different priorities and to adjust a transfer rate of a transceiver means (**33**) with a higher priority on a higher value than the transfer rate of a transceiver means (**31**) with a lower priority, wherein
said transceiver means comprise a modem (**31**) for modulating and demodulating of non-speech data (**TE_M**, **IP_M**) and a codec (**33**) for encoding and decoding of speech data (**TE_C**, **IP_C**), wherein said control means (**32**) is adapted to provide said codec (**33**) with a higher priority than the modem (**31**).

2. The interface establishing device according to claim 1, **characterized in that** said transceiver means (**31**, **33**) comprise a plurality of predetermined transfer rates and said control means (**32**) is adapted to select one of said predetermined transfer rates in response to said detected load.

3. The interface establishing device according to claim 1 or 2, **characterized in that** said control means (**32**) is adapted to send a test packet to a predetermined destination over said network (**4**), receive said test packet back from said predetermined destination and analyse the delay occurred in order to determine the load on said network.

4. A method for transmitting data to and receiving data from a network (**4**), comprising the steps of
detecting (**S1**) the load on said network (**4**), and
adjusting (**S2**, **S3**, **S4**) a transfer rate of a transceiver means (**31**, **33**) in response to said detected load,
**characterized in that**
said transceiver means comprise a plurality of transceiver means, the method further comprising the steps of
providing different priorities for each of said plurality of transceiver means (**31**, **33**) and adjusting a transfer rate of a transceiver means (**33**) with a higher priority on a higher value than the transfer rate of a transceiver means (**31**) with a lower priority, wherein
said transceiver means comprises a modem (**31**) for modulating and demodulating of non-speech data (**TE_M**, **IP_M**) and a codec (**33**) for encoding and decoding of speech data (**TE_C**, **IP_C**), and said codec (**33**) is provided with a higher priority than the modem **(31).**

5. The method according to claim 4,
**characterized in that** in said transceiver means (**31**, **33**) comprise a plurality of-predetermined transfer rates and in said adjusting step (**S2**, **S3**, **S4**) one of said predetermined transfer rates is selected in response to said detected load.

6. The method according to claim 4 or 5
**characterized by** further comprising the steps of
sending a test packet to a predetermined destination over said network (**4**);
receiving said test packet back from said predetermined destination; and
analysing the delay occurred in order to determine the load on said network.

## Patentansprüche

1. Verfahren zur Herstellung eines Baumaterials, wie etwa ein isolierendes Material, aus Torf, vorzugsweise direkt aus einem Moorvorkommen entnommenem Torf, wobei das Verfahren die aufeinanderfolgenden Schritte umfasst (a) Konvertieren einer Torfmasse in Torfbälle; (b) Entwässerung der Torfbälle bis der restliche Feuchtegehalt maximal 12% ist, vorzugsweise 10-12%; (c) Imprägnieren der entwässerten Torfbälle mit mindestens einer wasserabweisenden Substanz; und (d) Trocknen der imprägnierten Torfbälle, wobei das Verfahren ferner umfasst einen finalen Schritt (e) des Zusammenklebens der imprägnierten und getrockneten Torfbälle um ein Baumaterial von gewünschter Form und Dicke zu bilden, so dass das Baumaterial aus Torfbällen bestehet, die aufgrund ihrer Ballform nur an Berührungspunkten zwischen benachbarten Torfbällen verbunden sind, die resultierende Materialkonstruktion stellt ein poröses, leichtgewichtiges und stabiles Baumaterial bereit, welches mindestens hydrophob ist.

2. Verfahren nach Anspruch 1, wobei das Verfahren ferner umfasst, in Schritt (a), Konvertieren der Torfmasse in einen Torfstrang; Schneiden des Torfstrangs in Torfeinheiten; und Durchlaufen der Torfeinheiten durch ein rotierendes Rohr, wobei das Durchlaufen und Rotieren von Torfeinheiten in dem Rohr die Torfeinheiten in Torfbälle umformt.

3. Verfahren nach Anspruch 1 oder 2, wobei die Torfmasse in einen Torfstrang extrudiert wird.

4. Verfahren nach Anspruch 3, wobei der Torfstrang extrudiert wird mit einem kreisförmigen Querschnitt mit einer Querausdehnung in dem Bereich von 2-10 Millimeter.

5. Verfahren nach Anspruch 4, wobei der Torfstrang in Torfeinheiten von einer Läge gleich der Querausdehnung des Torfstrangs geschnitten wird.

6. Verfahren nach einem der vorhergehenden Ansprüche 1-5, wobei das Verfahren umfasst, in Schritt (a), Durchlaufen der Torfeinheiten durch ein rotierendes Rohr von zweiachsiger Rotation, womit die Bildung von ballförmigen Torfeinheiten in dem Rohr unterstützt wird.

## Revendications

1. Procédé de fabrication d'un matériau de construction, tel qu'un matériau isolant, à partir de tourbe, de préférence de la tourbe prélevée directement dans une tourbière accessible en surface, ledit procédé comprenant les étapes successives consistant à : (a) convertir une masse de tourbe en boulettes de tourbe ; (b) déshydrater les boulettes de tourbe jusqu'à ce que l'humidité restante soit égale au maximum à 12%, de préférence comprise entre 10 et 12% ; (c) imprégner les boulettes de tourbe déshydratées avec au moins une substance hydrofuge ; et (d) sécher les boulettes de tourbe imprégnées, dans lequel ledit procédé comprend en outre une étape finale (e) consistant à coller ensemble les boulettes de tourbe imprégnées et séchées de manière à former un matériau de construction qui présente une forme et une épaisseur désirées, ledit matériau de construction se composant ainsi de boulettes de tourbe qui, du fait de leur forme de boulette, sont seulement reliées au niveau des points de contact entre les boulettes de tourbe adjacentes, la construction de matériau qui en résulte fournissant un matériau de construction poreux, léger et résistant qui est au moins hydrophobe.

2. Procédé selon la revendication 1, dans lequel ledit procédé comprend en outre, dans l'étape (a), la conversion de ladite masse de tourbe en un cordon de tourbe ; la coupe dudit cordon de tourbe en tronçons de tourbe ; et le passage desdits tronçons de tourbe à travers un tuyau tournant, le passage et la rotation des tronçons de tourbe à l'intérieur du tuyau transformant les tronçons de tourbe en forme de boulettes de tourbe.

3. Procédé selon la revendication 1 ou la revendication 2, dans lequel ladite masse de tourbe est extrudée selon un cordon de tourbe.

4. Procédé selon la revendication 3, dans lequel ledit cordon de tourbe est extrudé selon une section transversale circulaire qui présente une dimension transversale se situant dans la plage comprise entre 2 et 10 millimètres.

5. Procédé selon la revendication 4, dans lequel ledit cordon de tourbe est coupé en tronçons de tourbe dont la longueur est égale à la dimension transversale de la lanière de tourbe.

6. Procédé selon l'une quelconque des revendications précédentes 1 à 5, dans lequel ledit procédé comprend, dans l'étape (a), le passage des tronçons de tourbe à travers un tuyau tournant soumis à une double rotation, facilitant ainsi la formation des tronçons de tourbe en forme de boulettes à l'intérieur du tuyau.
